# EUROPÄISCHE PATENTANMELDUNG

(11) **EP 4 390 154 A1**
(43) Veröffentlichungstag der Anmeldung: **26.06.2024**
(21) Anmeldenummer: 23218561.1
(22) Anmeldetag: 20.12.2023
(51) Int. Cl.: F16B 7/04, F16B 7/18

(54) **KLEMMVERBINDER**

(30) Priorität: 20.12.2022 DE 202022107117 U
(71) Anmelder: RK Rose + Krieger GmbH Verbindungs- und Positioniersysteme, 32423 Minden (DE)
(72) Erfinder: BRAUN, Johann, 32369 Rahden (DE); MEIER, Emanuel, 32423 Minden (DE); NEUBAUR, Michael, 31655 Stadthagen (DE)
(74) Vertreter: Kleine, Hubertus

(57) **Zusammenfassung**

Klemmverbinder (1) zum Verbinden zweier Vierkantrohre (2) bzw. Vierkant-Rohrabschnitte, der entlang einer axialen Richtung der Vierkantrohre (2) zweigeteilt ist und zwei mit ihren Endabschnitten (11) in die Vierkantrohre (2) einsetzbare Spannelemente (10) und mindestens eine Spanneinrichtung aufweist, um die Spannelemente (10) radial voneinander weg zu drücken, wobei die Spannelemente (10) jeweils eine Schräge (18) aufweisen, wobei die Schrägen (18) beider Spannelemente (10) aufeinanderliegen, so dass bei einem Auseinanderdrücken der Spannelemente (10) sich diese auch lateral gegeneinander verschieben.

## Beschreibung

Die Erfindung betrifft einen Klemmverbinder zum Verbinden zweier Vierkantrohre bzw. Vierkantrohrabschnitte, der entlang einer axialen Richtung der Vierkantrohre zweigeteilt ist und zwei mit ihren Endabschnitten in die Vierkantrohre einsetzbare Spannelemente aufweist und mindestens eine Spanneinrichtung, um die Spannelemente radial voneinander weg zu drücken.

Derartige Klemmverbinder finden in unterschiedlichsten Anwendungsbereichen Verwendung, beispielsweise zum temporären oder dauerhaften Aufbau von Gestellen oder sonstigen Tragekonstruktionen aus Vierkantrohren. Die Klemmverbinder können dazu mit geraden Rohrabschnitten sowie Winkel-, Kreuz- und/oder Gelenkelementen eingesetzt werden. Bei den Winkeln-, Kreuz- bzw. Gelenkelementen sind zwei oder mehr Rohrabschnitte zusammengefügt.

Jeweils zwei Rohre bzw. Rohrabschnitte werden mittels des Klemmverbinders miteinander verbunden, indem sie von je einer Seite auf den Klemmverbinder aufgesteckt werden. Der Klemmverbinder der eingangs genannten Art greift also von Innen in die Rohre ein. Durch die Spanneinrichtung werden dann die Spannelemente auseinandergedrückt, wodurch die Vierkantrohre klemmend auf dem Klemmverbinder gehalten werden. Gegenüber ähnlichen Klemmverbindern, die Rohre von außen einklemmen, lassen sich mit den innen eingesetzten Klemmverbindern schlanke Verbindungen realisieren, die radial nicht oder nur unwesentlich über die Abmessungen des jeweiligen Vierkantrohrs hinausragen.

Derartige Klemmverbinder sind beispielsweise aus den Druckschriften FR72 3,4 91A oder GP2449097A bekannt. Sie bestehen im Wesentlichen aus zwei Spannelementen, die entlang einer axial verlaufenden Ebene aufeinander liegen und mit ihren Endabschnitten in die zu verwendenden Rohre eingesetzt werden. Axial mittig am Klemmverbinder ist ein Mittelabschnitt ausgebildet, der einen größeren Durchmesser als die Endabschnitte aufweist und an dem die Rohre anliegen. Im Mittelabschnitt ist als Spannelement mindestens eine Schraube angeordnet, die bei einem Verdrehen die beiden Spannelemente auseinander drückt. In beiden Schriften sind Klemmverbinder zur Verbindung von Rohren mit einem runden Querschnitt dargestellt. In der Schrift GB 2449097A ist ergänzend erwähnt, dass die Klemmverbinder auch für Rohre mit anderen Querschnitten, zum Beispiel für Vierkantrohre, ausgebildet sein können.

Bei Vierkantrohren führt das Auseinanderdrücken der Spannelemente zu Spannkräften, die auf zwei gegenüberliegende Innenseiten der Vierkantrohre ausgeübt werden. In der dazu senkrecht stehenden radialen Richtung werden die Rohre nicht geklemmt, was dazu führt, dass in dieser Richtung ein Winkelspiel verbleibt. Dieses kann zu nicht winkelmaßhaltigen Gestellen bzw. zu Instabilitäten der Gestelle oder sonstiger mit den Klemmverbindern aufgebauter Anordnungen führen.

Es ist daher eine Aufgabe der vorliegenden Erfindung, einen Klemmverbinder der eingangs genannten Art zur Verwendung mit Vierkantrohren zu schaffen, der eine stabile und winkelmaßhaltige Verbindung in allen Raumrichtungen ermöglicht.

Diese Aufgabe wird durch einen Klemmverbinder mit den Merkmalen des unabhängigen Anspruchs gelöst. Vorteilhafte Ausgestaltungen und Weiterbildungen sind Gegenstand der abhängigen Ansprüche.

Ein erfindungsgemäßer Klemmverbinder zeichnet sich dadurch aus, dass die Spannelemente jeweils eine Schräge aufweisen, wobei die Schrägen beider Spannelemente aufeinanderliegen, so dass bei einem Auseinanderdrücken der Spannelemente sich diese auch lateral gegeneinander verschieben.

Durch die aufeinander gleitenden beiden Schrägen werden die Spannelemente bei Auseinanderdrücken auch seitlich gegeneinander verschoben. Dieses führt dazu, dass ein aufgestecktes Vierkantrohr bzw. ein Vierkantrohr-Abschnitt nicht nur an den beiden Innenseiten geklemmt wird, die sich in der Spannrichtung gegenüberliegen, sondern auch an den verbleibenden beiden Innenseiten - dort konkret an zwei gegenüber liegenden Ecken. Ein Kippeln des Klemmverbinders in dem Vierkantrohr ist so verhindert. Gestelle oder andere Anordnungen, die unter Verwendung erfindungsgemäßer Klemmverbinder aufgebaut werden, sind entsprechend winkelmaßhaltig und stabil. Die Schräge kann dabei z.B. einen Winkel im Bereich von 10 bis 50° gegenüber einer Normalenrichtung aufweisen. Die Normalenrichtung ist die Richtung, in der die Spannelemente ohne die Schrägen auseinandergedrückt würden.

In einer vorteilhaften Ausgestaltung des Klemmverbinders weisen die Spannelemente jeweils einen Mittelabschnitt und sich in der axialen Richtung daran anschließende Endabschnitte auf. Die Spannelemente sind so aufeinander gelegt, dass jeweils aufeinanderliegende Endbereiche zusammen in eines der zu verbindenden Vierkantrohre bzw. Rohrabschnitte eingesteckt wird. Die Endabschnitte sind bevorzugt u-förmig mit einer Basis und zwei Schenkel geformt, so dass sie zusammengelegt einen Querschnitt aufweisen, der dem des Vierkantrohres entspricht.

Weiter bevorzugt sind die u-förmigen Endabschnitte an ihrer Basis und einem, bevorzugt genau einem, ihrer Schenkel mit Riffelungen versehen. Durch die Riffelungen wird der Reibschluss bei der Klemmung erhöht.

In einer vorteilhaften Ausgestaltung des Klemmverbinders ist an dem Mittelabschnitt ein zu dem gegenüberliegenden Spannelement weisender Block angeordnet, der lateral außermittig angeordnet ist und dessen in Richtung des gegenüberliegenden Spannelements ragende Innenseite die Schräge bildet. Bevorzugt ist in den Block eine Gewindebohrung in Richtung des gegenüberliegenden Spannelements eingebracht, in die eine Schraube oder ein Gewindestift als Spannmittel eingeschraubt ist. In einem kompakten Aufbau ist so im Mittelabschnitt sowohl das Spannmittel, als auch die Schräge angeordnet. Der Mittelabschnitt steht radial bevorzugt zudem über die Endabschnitte hervor, wodurch beidseitig Schultern als Anlageflächen und Anschläge für die Wandung des aufgesteckten Rohrs gebildet sind.

Weiter vorteilhaft sind die Spannelemente identische Gleichteile, wodurch der Herstellungsaufwand und damit auch die Herstellungskosten der Klemmverbinder minimiert werden. Die Spannelemente können aus Zink oder Aluminium in einem Druckguss, aus Stahl oder Kunststoff gefertigt sein.

Die Erfindung wird nachfolgend anhand eines Ausführungsbeispiels mithilfe von Figuren näher erläutert. Die Figuren zeigen:
- Figur 1a, b: eine beispielhafte Klemmanordnung mit einem Winkelelement und zwei Klemmverbindern;
- Figur 1c: die Klemmanordnung gemäß den Figur 1a, b, ergänzt um ein Vierkantrohr;
- Figur 2: eine räumliche Detailansicht eines Klemmverbinders der Klemmanordnung der Figuren 1a-c;
- Figur 3a-c: drei verschiedene Ansichten eines Spannelements des Klemmverbinders der Figur 2; und
- Figur 4a, b: jeweils eine Schnittdarstellung der Klemmanordnung aus Figur 1b in verschiedenen Klemmzuständen des Klemmverbinders.

In den nachfolgend beschriebenen Figuren ist ein Ausführungsbeispiel eines erfindungsgemäßen Klemmverbinders dargestellt. In allen Figuren kennzeichnen gleiche Bezugszeichen gleiche Elemente. Aus Gründen der Übersichtlichkeit ist nicht in jeder Figur jedes Element mit einem Bezugszeichen versehen.

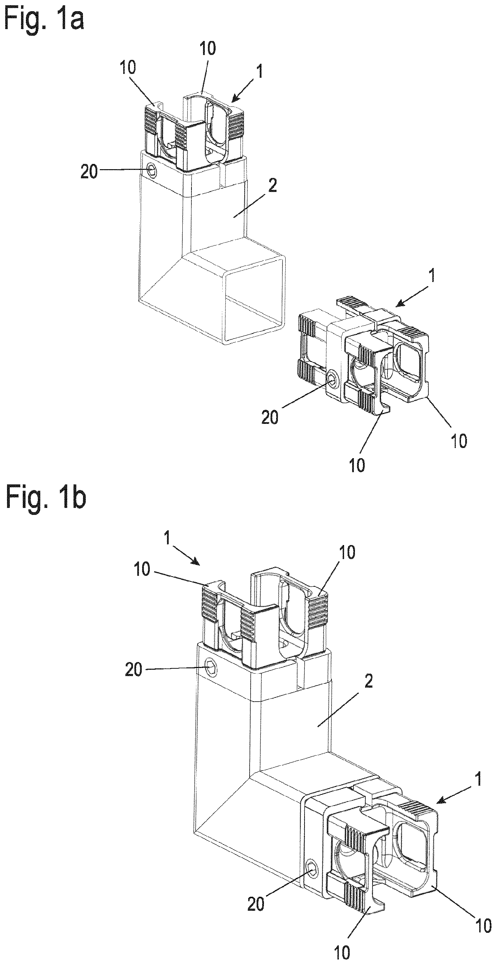

In den Figuren 1a bis 1c ist zunächst in jeweils einer Schrägansicht eine Klemmanordnung, die Teil eines größeren Systems, zum Beispiel eines Gestells, sein kann, in verschiedenen Stadien ihres Zusammenbaus gezeigt.

In Figur 1a umfasst die Klemmanordnung zwei Klemmverbinder 1 und ein Winkelelement 2. Das Winkelelement 2 ist aus zwei Vierkantrohrabschnitten gefertigt. Vorliegend ist der Querschnitt der Vierkantrohre im Wesentlichen quadratisch. Es sind alternativ auch rechteckige Querschnitte möglich.

Im dargestellten Beispiel stehen die beiden Vierkantrohrabschnitte des Winkelelements 2 in einem Winkel von 90° zueinander. Es können auch Winkelelemente mit anderen Winkeln verwendet werden, ebenso wie Bogenelemente. Auch können Elemente eingesetzt werden, die aus mehr als zwei Vierkantrohrabschnitten gefertigt sind, beispielsweise Eckelemente, die drei Abschnitte aufweisen, und Kreuzelemente mit vier Abschnitten.

Einer der Klemmverbinder 1 ist in der Figur 1a in eine Öffnung des Winkelelements 2 eingesetzt, der andere Klemmverbinder 1 befindet sich vor der anderen Öffnung des Winkelelements 2 in einer Position vor dem Einsetzen. In Figur 1b ist dieser zweite Klemmverbinder 1 dann ebenfalls eingesetzt.

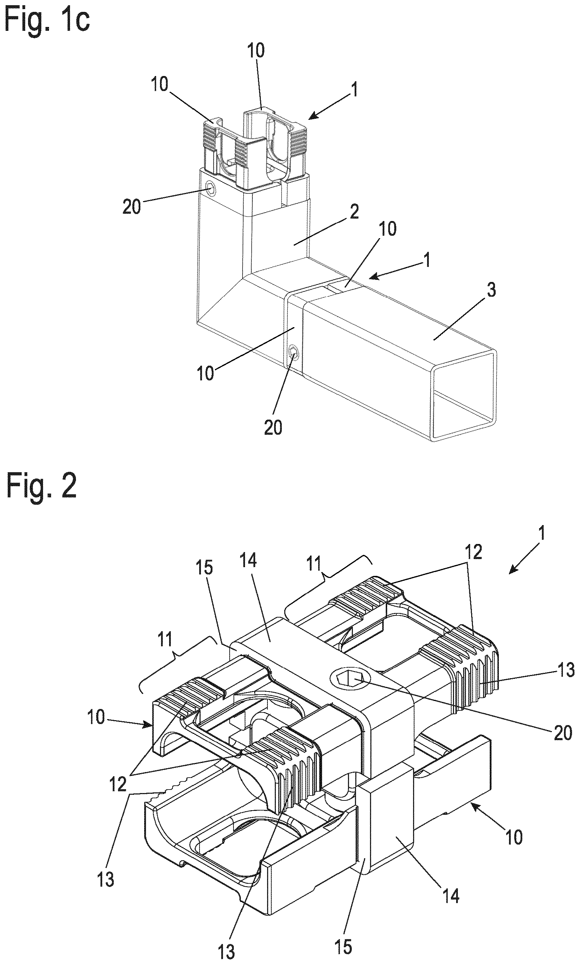

Jeder der Klemmverbinder 1 ist aus zwei Spannelementen 10 gebildet, die entlang einer axial ausgerichteten Mittelebene aufeinandergelegt sind und teilweise ineinandergreifen. Der Aufbau des Klemmverbinders 1 wird in den nachfolgenden Figuren noch detaillierter erläutert. Auf den jeweils herausstehenden Teil der Klemmverbinder 1 kann dann ein zweites Rohr bzw. ein Rohrabschnitt aufgesetzt werden, wie das in Figur 1c mit einem Vierkantrohr 3 bei einem der Klemmverbinder 1 gezeigt ist.

Das Vierkantrohr 3 bzw. die Rohrabschnitte des Winkelelements 2 liegen jeweils an einem mittleren Abschnitt des Klemmverbinders 1 an, der radial über die eingesteckten Endabschnitte hervorsteht. In diesem mittleren Abschnitt sind Gewindestifte 20 als Spannmittel angeordnet, mit denen die beiden Spannelemente 10 des Klemmverbinders 1 auseinander gedrückt werden können, wodurch sich der Klemmverbinder 1 innen in dem Vierkantrohr 3 bzw. den Rohrabschnitten verklemmt und diese so miteinander verbindet.

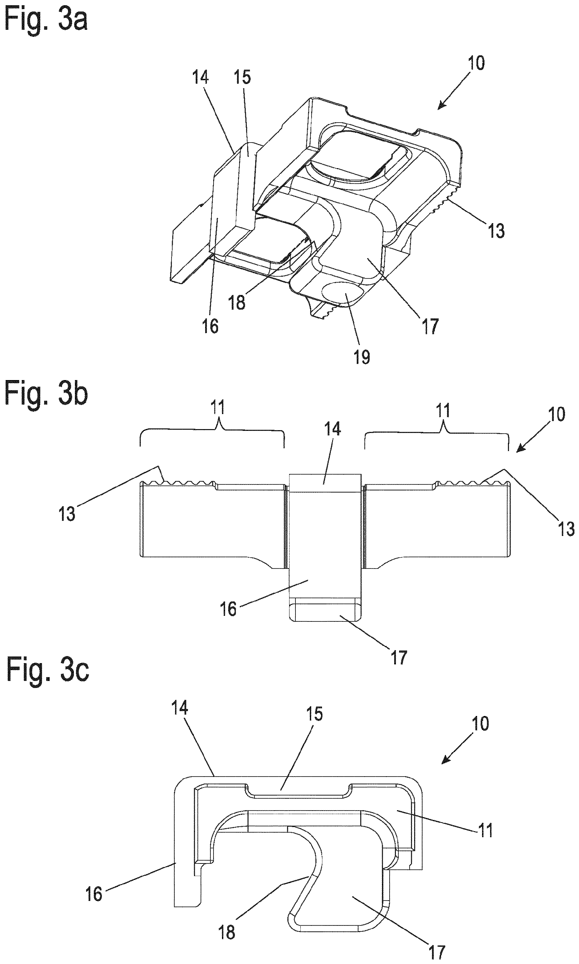

Figur 2 zeigt den Klemmverbinder 1 in einer räumlichen Darstellung separat detaillierter. In den Figuren 3a bis c sind verschiedene Darstellungen eines der Spannelemente 10 des Klemmverbinders 1 wiedergegeben. Figur 3a zeigt eine räumliche Darstellung des Spannelements 10, wobei schräg auf die Innenseite geblickt wird, d.h. auf die Seite, die im zusammengesetzten Zustand zu dem zweiten Spannelement 10 weist. Figur 3b zeigt eine Seitenansicht und Figur 3c ein Frontansicht auf das Spannelement 10.

Das Spannelement 10 weist zwei Endabschnitte 11 auf, die, wie in den Figuren 1a-c dargestellt ist, jeweils in ein offenes Ende des Vierkantrohrs 3 bzw. Rohrabschnitts des Winkelverbinders 2 eingesetzt werden. Die Endabschnitte 11 sind von einem Mittelabschnitt 14 getrennt, der radial weiter nach außen ragt als die Endabschnitte 11. Entsprechend ist zu beiden Seiten des Mittelabschnitts 14 eine Schulter 15 gebildet, an der das Vierkantrohr 3 bzw. die Rohrabschnitte mit ihrer Wandlung anliegen. Die Schultern 15 bilden somit axiale Anschläge für das Einsetzen des Klemmverbinders 1 in das Vierkantrohr 3 oder den Rohrabschnitt.

Die Endabschnitte 11 sind u-förmig ausgebildet, mit einer Basis, deren Breite etwas kleiner ist als die lichte Weite des Vierkantrohrs 3 oder Rohrabschnitts. Der äußere Bereich des Endabschnitt 11 ist an der Basis beidseitig mit einer Riffelung 12 versehen. Weiter weist der Endabschnitt 11 eine vergleichbare Riffelung 13 an einer Schenkelseite auf, wohingegen die andere Schenkelseite ohne Riffelung ausgebildet ist. Im Mittelabschnitt 14 ist der bereits genannte Gewindestift 20 als Spannmittel außermittig angeordnet.

Zwei baugleiche Spannelemente 10 mit jeweils einem Gewindestift 20 bilden zusammen einen Klemmverbinder 1. Vorteilhaft kann durch Verwendung von Gleichteilen so der Herstellungsaufwand und damit auch die Herstellungskosten minimiert werden. Die Spannelemente 10 können aus Metall gefertigt sein, beispielsweise gegossen aus Stahl oder in einem Druckgussverfahren aus Zink oder Aluminium hergestellt. Auch die Verwendung von Kunststoff für die Spannelemente 10 ist denkbar.

Die Ausgestaltung des Spannelements 10 im Bereich seines Mittelabschnitts 14 ist insbesondere gut in den Figuren 3a-c erkennbar. Auf der Seite des Schenkels des Endabschnitt 11, der nicht mit der Riffelung 13 versehen ist, ist der Mittelabschnitt 14 nach unten, d.h. in Richtung des zweiten Spannelements 10 in Form einer Lasche 16 verlängert.

Außermittig weist der Mittelabschnitt 14 in einem der Lasche 16 gegenüberliegenden Bereich einen in Richtung des anderen Spannelements 10 weisenden Block 17 auf, durch den eine Gewindebohrung 19 führt, in die der Gewindestift 20 eingeschraubt wird. Der Block 17 ist an seiner nach innen weisenden Seite mit einer Schräge 18 versehen. Gegenüber einer Normalenrichtung (z.B. gegenüber einer Ebene, die parallel zur Lasche 16 verläuft), beträgt die Neigung im vorliegenden Fall etwa 30°. In alternativen Ausgestaltungen kann die Neigung auch in einem Bereich zwischen 10 und 50° liegen. Die Richtung der Neigung ist derart, dass durch die Schräge 18 ein Hinterschnitt gebildet ist.

Werden die beiden Spannelemente 10 zu dem Klemmverbinder 1 zusammengelegt, liegt die Innenseite der Lasche 16 des einen Spannelements 10 mit seitlichem Spiel an der Außenseite des Blocks 17 des anderen Spannelements 10 an. Weiter liegen die beiden Schrägen 18 aufeinander. Der Bereich des Mittelabschnitts 14 neben dem Block 17 dient als Auflagefläche für den Gewindestift 20 des jeweils gegenüberliegenden Spannelements 10.

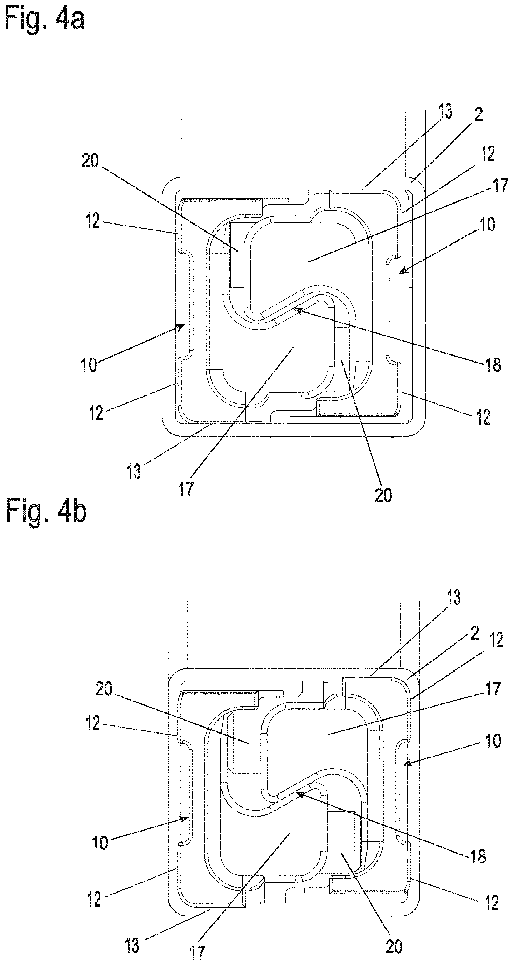

In den Figuren 4a und 4b ist ein Querschnitt durch einen Klemmverbinder 1 dargestellt, der in einen Rohrabschnitt eingesetzt ist, hier beispielhaft des Vierkantrohrs 2 gemäß Figur 1c. Figur 4a zeigt den Klemmverbinder 1 nach dem Einsetzen in einem nicht gespannten Zustand, wohingegen Figur 4b den verspannten Zustand des Klemmverbinders 1 zeigt.

Beim Einschrauben der beiden Gewindestifte 20 drücken sich die beiden Spannelemente 10 auseinander. Durch die beiden aufeinander gleitenden Schrägen 18 werden die Spannelemente 10 dabei lateral gegeneinander verschoben. Dieses führt dazu, dass nicht nur die Riffelungen 12 an der Basis der Spannelemente 10 an der entsprechenden Innenseite des Vierkantrohrabschnitts des Winkelelements 2 anliegen, sondern auch die Riffelungen 13 an zwei gegenüberliegenden weiteren Innenseiten des Vierkantrohrs anliegen und auseinandergedrückt werden. Im Endeffekt wird so eine Klemmung des Vierkantrohrs an insgesamt sechs Stellen erreicht, nämlich im Bereich der vier Riffelungen 12 der beiden Spannelemente 10 und im Bereich der beiden Riffelungen 13 an den Seiten der beiden Spannelemente 10. Es werden insgesamt also alle vier Innenseiten des Vierkantrohrabschnitts des Winkelelements 2 mit Klemmkraft beaufschlagt, wodurch ein Kippeln des Klemmverbinders 1 in dem Vierkantrohr verhindert ist.

### Bezugszeichenliste

- 1: Klemmverbinder
- 2: Winkelelement
- 3: Vierkantrohr

- 10: Spannelement
- 11: Endabschnitt
- 12: Riffelung
- 13: Riffelung
- 14: Mittelabschnitt
- 15: Schulter
- 16: Lasche
- 17: Block
- 18: Schräge
- 19: Gewindebohrung

- 20: Gewindestift

## Patentansprüche

1. Klemmverbinder (1) zum Verbinden zweier Vierkantrohre (2) bzw. Vierkant-Rohrabschnitte, der entlang einer axialen Richtung der Vierkantrohre (2) zweigeteilt ist und zwei mit ihren Endabschnitten (11) in die Vierkantrohre (2) einsetzbare Spannelemente (10) und mindestens eine Spanneinrichtung aufweist, um die Spannelemente (10) radial voneinander weg zu drücken, **dadurch gekennzeichnet, dass**
die Spannelemente (10) jeweils eine Schräge (18) aufweisen, wobei die Schrägen (18) beider Spannelemente (10) aufeinanderliegen, so dass bei einem Auseinanderdrücken der Spannelemente (10) sich diese auch lateral gegeneinander verschieben.

2. Klemmverbinder (1) nach Anspruch 1, bei dem die Spannelemente (10) jeweils einen Mittelabschnitt (14) und sich in der axialen Richtung daran anschließende Endabschnitte (11) aufweisen.

3. Klemmverbinder (1) nach Anspruch 2, bei dem die Endabschnitte (11) u-förmig geformt sind.

4. Klemmverbinder (1) nach Anspruch 3, bei dem die u-förmigen Endabschnitte (11) an ihrer Basis und einem der Schenkel mit Riffelungen (12, 13) versehen sind.

5. Klemmverbinder (1) nach Anspruch 4, bei dem die u-förmigen Endabschnitte (11) an der Basis und jeweils genau einem der Schenkel mit Riffelungen (12, 13) versehen sind.

6. Klemmverbinder (1) nach einem der Anspruch 2 bis 5, bei dem an dem Mittelabschnitt (14) ein zu dem gegenüberliegenden Spannelement (10) weisender Block (17) angeordnet ist, der lateral außermittig angeordnet ist und dessen in Richtung des gegenüberliegenden Spannelements (10) ragende Innenseite die Schräge (18) bildet.

7. Klemmverbinder (1) nach Anspruch 6, wobei durch den Block (17) eine Gewindebohrung (19) in Richtung des gegenüberliegenden Spannelements (10) führt, in die eine Schraube oder ein Gewindestift (20) als Spannmittel eingeschraubt ist.

8. Klemmverbinder (1) nach einem der Ansprüche 2 bis 7, bei dem die Mittelabschnitte (14) radial über die Endabschnitte (11) hervorstehen.

9. Klemmverbinder (1) nach einem der Ansprüche 1 bis 8, wobei die Schräge (18) einen Winkel im Bereich von 10 bis 50° gegenüber einer Normalenrichtung aufweist.

10. Klemmverbinder (1) nach einem der Ansprüche 1 bis 9, bei dem die Spannelemente (10) identische Gleichteile sind.

11. Klemmverbinder (1) nach einem der Ansprüche 1 bis 10, bei dem die Spannelemente (10) aus Zink, Aluminium, Stahl oder Kunststoff gefertigt sind.
